# EUROPEAN PATENT SPECIFICATION

(11) **EP 2 620 317 B1**
(45) Date of publication and mention of the grant of the patent: **06.01.2016**
(21) Application number: 13151474.7
(22) Date of filing: 16.01.2013
(51) Int. Cl.: B60N 2/00, H01H 3/14, B60N 2/68, H01H 3/16, B60R 21/015

(54) **Occupant detection sensor assembly with integrated fasteners**
Insassenerkennungssensoranordnung mit integrierten Befestigungsvorrichtungen
Ensemble de capteur de détection d'occupant avec des éléments de fixation intégrés

(30) Priority: 26.01.2012 US 201213358537
(43) Date of publication of application: 31.07.2013
(73) Proprietor: Delphi Technologies, Inc., Troy, MI 48007 (US)
(72) Inventor: Sprecher, Phillip B., Noblesville, IN Indiana 46062 (US)
(74) Representative: Delphi France SAS

(56) References cited:
- EP-A1- 2 216 200
- EP-A2- 1 961 625
- US-A1- 2005 231 379

## Description

### TECHNICAL FIELD

The present invention is directed to a sensor assembly disposed in a vehicle seat for detecting an occupant on a seating surface of a seat. The sensor assembly includes integrated fasteners configured to couple the components of the sensor assembly together.

### BACKGROUND OF THE INVENTION

Motor vehicles are customarily equipped with sensor assemblies for seat occupant detection that may be used in connection with occupant safety systems including seat belts and pyrotechnically deployed restraints such as air bags. For example, such a sensor assembly can be used in connection with a seatbelt switch to detect an unrestrained seat occupant and trigger an appropriate reminder to the occupant to fasten the seat restraint. Additionally, sensor assemblies can be used to enable or disable air bag deployment for a particular seating location in the vehicle and potentially to classify the occupant by seated weight.

A common approach to seat occupant detection involves installing one or more pressure-responsive sensors on top of, within, or under the bottom foam cushion of the seat. In some cases, the pressure exerted on the sensor assembly is measured and compared to one or more calibrated thresholds, as shown for example, in published US patent application 2006/0196281 A1. In other cases, a calibrated occupant seat pressure is detected by closure of one or more switches, as shown for example, in US Patent US 7,523,679 B2. Other examples of sensor assemblies used to detect a seat occupant are shown in U.S. Pat 7,891,260 and in EP 2 216 200, A1 (corresponding to the preamble of claim 1).

Another example of a sensor assembly used to detect a seat occupant is shown in U.S. Pat 7,891,260 B2. This sensor assembly consisted of an upper plate, a compressible center layer, a lower plate, and a switch mechanism. The sensor assembly was typically mounted in the passenger seat under the bottom foam cushion and above the seat frame structure. The sensor assembly shown in U.S. Pat 7,891,260 was based on use of simple sheet materials for the upper and adhesive was used to mount the switch mechanism to one of the plates, provide strain relief for the switch mechanism wiring, and provide reliable alignment of the switch mechanism with a switch activator. The compressible center layer was formed of a single elastomeric mat and was retained to a plate by separate fasteners, such as push pins. This sensor assembly thus required numerous fasteners and adhesives that are undesirably expensive and increase manufacturing costs.

### SUMMARY OF THE INVENTION

In accordance with one embodiment of this invention, a sensor assembly for detecting an occupant on a seating surface of a seat is provided. The sensor assembly includes a first plate and a second plate disposed in the seat in an orientation that is substantially parallel to the seating surface. The first plate and the second plate are substantially non-compliant. The sensor assembly further includes an elastomeric mat disposed between the first plate and the second plate. The elastomeric mat includes an array of protuberances that extend toward and contact at least one of the first plate and the second plate, where the protuberances collapse by an amount indicative of an occupant weight when the occupant sits on the seating surface. The sensor assembly also includes a switch mechanism affixed to at least one of the first plate and the second plate. The switch mechanism has a first state corresponding to an absence of the occupant whereby the protuberances of the elastomeric mat are not collapsed and indicating an occupant weight is less than a threshold. The switch mechanism has a second state corresponding to the presence of the occupant whereby the protuberances of the elastomeric mat are collapsed indicating an occupant weight greater than the threshold. The first plate defines a first integrated fastener and the second plate defines a second integrated fastener configured to engage with the first integrated fastener effective to slidably couple the first plate to the second plate. The first and second integrated fasteners also limit motion such that the first plate and the second plate are separated by less than a maximum distance when the protuberances of the elastomeric mat are not collapsed. The first and second integrated fasteners also allow translational movement of the first plate relative to the second plate effective to collapse the protuberances when the occupant weight is greater than the threshold and thereby cause the switch mechanism to indicate the second state.

Further features and advantages of the invention will appear more clearly on a reading of the following detailed description of the preferred embodiment of the invention, which is given by way of non-limiting example only and with reference to the accompanying drawings.

### BRIEF DESCRIPTION OF THE DRAWINGS

The present invention will now be described, by way of example with reference to the accompanying drawings, in which:
Fig. 1 is an exploded cross sectional view of a seat equipped with a sensor assembly in accordance with one embodiment;
Fig. 2 is a cross sectional view of a plate of Fig. 1 deflected by a compressive force in accordance with one embodiment;
Fig. 3 is an exploded perspective view of the sensor assembly of Fig. 1 in accordance with one embodiment;
Fig. 3A is a close-up perspective view of a snap feature of Fig. 3 in accordance with one embodiment;
Fig. 4 is a cross sectional view of the plates of Fig. 1 in accordance with one embodiment; and
Fig. 5 illustrates an outboard face of a plate of the sensor assembly of Fig. 1 in accordance with one embodiment.

### DESCRIPTION OF THE PREFERRED EMBODIMENT

The sensor assembly is disclosed herein in the context of a seat sensor for sensing the presence of a seat occupant when sufficient force due to the occupant's seated weight is transmitted to the sensor assembly. However, it should be understood that the disclosed sensor assembly may be used in other applications, both vehicular and non-vehicular.

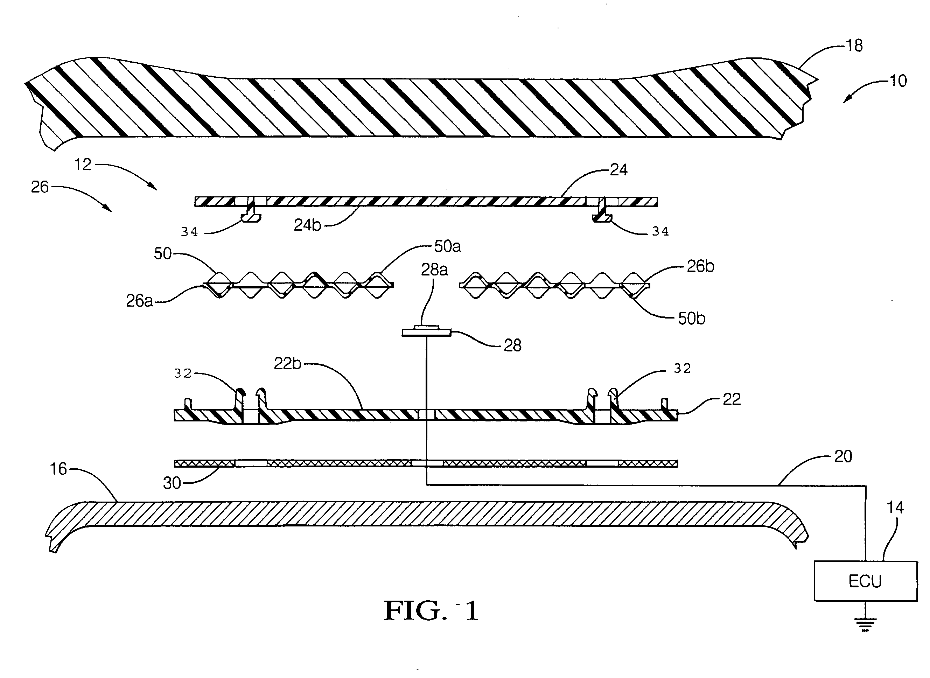

Referring to Fig. 1, the reference numeral 10 generally designates a vehicle seat equipped with a sensor assembly 12 for generally detecting the presence or absence of an occupant on a seating surface of the seat 10. As will become clear in the description that follows, the sensor assembly 12 is particularly useful to determine if an occupant weight is greater than a threshold, typically between 14 kilograms (14 kg) and 24 kilograms (24 kg) at room temperature (23° C). In the illustrated embodiment, the sensor assembly 12 is disposed between the seat suspension 16 and a foam seat cushion 18, though it should be understood that the sensor assembly 12 may be installed in a different location in the seat 10, such as inside of the seat cushion 18. In any event, the sensor assembly 12 is electrically coupled to an electronic control unit (ECU) 14 by a wiring harness 20 containing one or more wires. An embodiment may also be envisioned in which the sensor assembly 12 is wirelessly coupled to the ECU 14. The ECU 14 analyzes the state of sensor assembly 12 to determine whether the seat 10 is occupied, and activates a seat belt reminder indicator (not shown) if it determines that the seat 10 is occupied and a seat belt for seat 10 is not fastened. Of course, the ECU 14 may also perform other functions such as enabling or disabling airbag deployment.

As illustrated in Fig. 1, the sensor assembly 12 includes the following components: a first plate 22, a second plate 24, an elastomeric mat 26, and a switch mechanism 28 including a wiring harness 20 disposed between the first and second plates 22, 24. The first plate 22 and the second plate 24 are configured to transfer the force generated by an occupant sitting in the seat 10 to the switch mechanism 28. In a non-limiting example, a felt pad 30 may be disposed beneath the first plate 22 to abate squeaking caused by a mechanical interface between the first plate 22 and the seat suspension 16.

The first plate 22 and the second plate 24 are disposed in the seat 10 in an orientation that is substantially parallel to the seating surface. As used herein, substantially parallel is within 30° of absolutely parallel. The first plate 22 and the second plate 24 are substantially non-compliant so that compressive forces applied to the sensor assembly 12 due to seat occupant weight are nearly uniformly applied to the elastomeric mat 26.

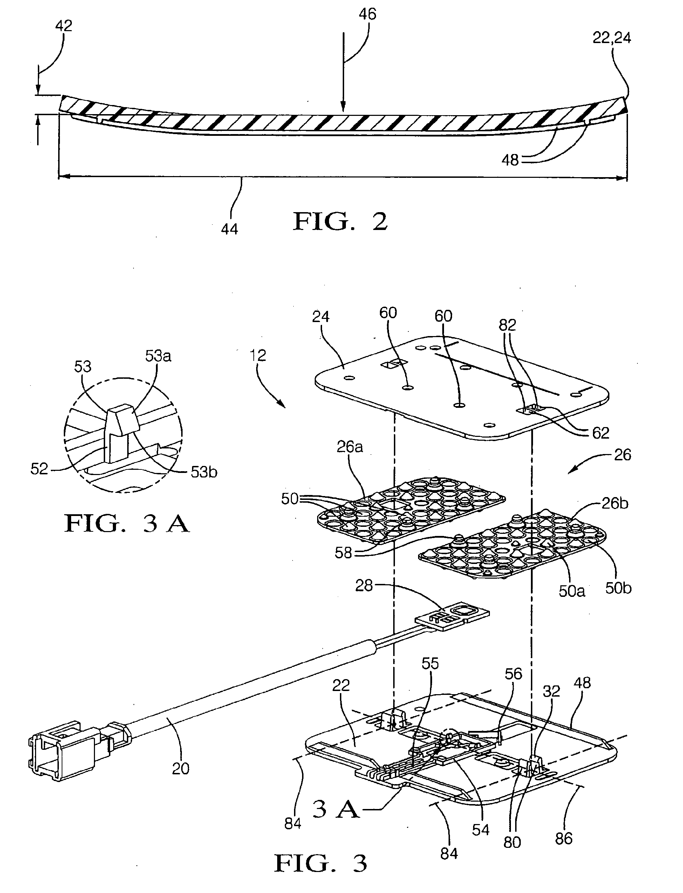

As illustrated in Fig. 2 and as used herein, a substantially non-compliant plate exhibits a transverse deflection 42 that is less than 10% of the lateral dimension 44 of the first or second plate 22, 24 when a maximum compressive force 46 is applied to the sensor assembly 12. As used herein, the maximum compressive force 46 is the highest compressive force caused by the weight of a seat occupant to which the sensor assembly 12 is designed to be subjected.

The first plate 22 is preferably made of a non-compliant plastic material such as polycarbonate (PC) or polyoxymethylene (POM), also known as acetal. The second plate 24 is preferably made of a non-compliant plastic material such as acrylonitrile butadiene styrene (ABS) or high temperature ABS. In a non-limiting example, the thickness of the first and second plates 22, 24 may be 1.5 to 1.7 mm. Optionally, stiffening ribs 48 may be added to the first or second plates 22, 24 to enhance non-compliance of the first or second plates 22, 24.

Referring once again to Fig. 1, the elastomeric mat 26 is disposed between the first plate 22 and the second plate 24. The elastomeric mat 26 includes an array of protuberances 50 that extend toward and contact at least one of the first plate 22 and the second plate 24. The protuberances 50 collapse by an amount indicative of an occupant weight when the occupant sits on the seating surface. The elastomeric mat 26 is preferably made of a resilient material such as silicone, and as illustrated in Figs. 1 and 3, is formed with an array of hollow cone-shaped protuberances 50 that alternately extend toward the first plate 22 and the second plate 24. The protuberances 50 that extend upward toward the second plate 24 are identified in Figs. 1 and 3 by the reference numeral 50a, while the protuberances 50 that extend downward toward the first plate 22 are identified by the reference numeral 50b. As illustrated in Figs. 1 and 3, the elastomeric mat 26 may preferably comprise a first elastomeric mat 26a and a second elastomeric mat 26b to accommodate the switch mechanism 28 and wiring harness 20. Alternately, a single elastomeric mat 26 having a central opening formed in the elastomeric mat 26 to accommodate the switch mechanism 28 may be used. The elastomeric mat 26 is preferably mechanically fastened to the first or second plate 22, 24, in a non-limiting example by a push pin. Where the elastomeric mat 26 comprises two elastomeric mats 26a and 26b, both of the elastomeric mats 26a and 26b may be attached to the same plate 22 or 24 or the elastomeric mats 26a and 26b may be attached to different plates 22 and 24.

As shown in Fig. 1, the switch mechanism 28 is affixed to at least one of the first plate 22 and the second plate 24. In a non-limiting example, the switch mechanism 28 is glued, mechanically fastened, or otherwise affixed to a central location on an inboard face 22b of first plate 22. The switch mechanism 28 has a first state corresponding to an absence of the occupant whereby the protuberances 50 of the elastomeric mat 26 are not collapsed and indicating an occupant weight less than a threshold is resting on the seating surface of the seat 10. The switch mechanism 28 has a second state corresponding to the presence of the occupant whereby the protuberances 50 of the elastomeric mat 26 are collapsed and indicating an occupant weight greater than the threshold is resting on the seating surface of the seat 10.

Continuing to refer to Fig. 1, the first plate 22 defines a first integrated fastener 32 and the second plate 24 defines a second integrated fastener 34. The second integrated fastener 34 is configured to engage with the first integrated fastener 32 effective to slidably couple the first plate 22 to the second plate 24. As used herein, an integral fastener is a fundamental portion of the component that defines it. It may be constructed of the same material as the defining component. The first integrated fastener 32 and the second integrated fastener 34 are configured to limit motion such that the first plate 22 and the second plate 24 are separated by less than a maximum distance (as a non-limiting example, 8 mm) when the protuberances 50 of the elastomeric mat 26 are not collapsed. The first integrated fastener 32 and the second integrated fastener 34 are slidably coupled to allow translational movement of the first plate 22 relative to the second plate 24 effective to collapse the protuberances 50 when the occupant weight is greater than the threshold and thereby cause the switch mechanism 28 to indicate the second state.

The first integrated fastener 32 and the second integrated fastener 34 eliminate the need for separate fastening devices, such as push pins, used with prior art sensor assemblies to attach the first plate 22 to the second plate 24. The first integrated fastener 32 and the second integrated fastener 34 reduce the number of parts required to assemble the sensor assembly 12, thereby favorably reducing the assembly part count and likely beneficially reducing the total part cost of the sensor assembly 12. The first integrated fastener 32 and the second integrated fastener 34 allow the first plate 22 to be assembled to the second plate 24 without the need to place, align, and assemble separate fastening devices, thus simplifying the assembly process for the sensor assembly 12. The first and second integrated fasteners 32, 34 may allow assembly of the first plate 22 to the second plate 24 without the need for additional tools, potentially providing additional savings in manufacturing costs.

When the sensor assembly 12 is assembled as described above, the tips of the protuberances 50a and 50b respectively contact the first plate 22 and the second plate 24 to separate the first plate 22 and the second plate 24 by the maximum distance sufficient to accommodate the height of switch mechanism 28. In other words, with switch mechanism 28 affixed to the inboard face 22b of the first plate 22, there is a slight clearance between the switch mechanism 28 and the inboard face 24b of the second plate 24. This is the condition that occurs when the seat 10 is unoccupied or when insufficient occupant weight is applied to the seating surface of seat cushion 18 to exceed the threshold. However, when sufficient occupant weight is applied to the seating surface of seat cushion 18 to exceed the threshold, the protuberances 50 collapse, allowing the second plate 24 to contact and actuate the switch mechanism 28. The same effect can be achieved with an elastomeric mat 26 formed with an array of hollow protuberances 50 that only extend toward one of the plates 22 or 24, but the configuration illustrated in Figs. 1 and 3 is preferable because its orientation can be reversed without affecting the operation of the sensor assembly 12, and because the likelihood of air-lock suction between the elastomeric mat 26 and the inboard face 22b or 24b of a plate 22 or 24 is virtually eliminated.

In a non-limiting example, in the first state the switch mechanism 28 attached to the first plate 22 is not in contact with the inboard face 24b of the second plate 24. The non-collapsed protuberances 50 of the elastomeric mat 26 provide sufficient resistance to a compressive force applied to the sensor assembly 12 by an unoccupied seat or insufficient occupant weight to maintain separation of the inboard face 24b and the switch mechanism 28. Furthering this example, in the second state the switch mechanism 28 is in contact with the inboard face 24b. The protuberances 50 of the elastomeric mat 26 collapse due to the compressive force applied to the sensor assembly 12 by the occupant weight allowing the inboard face 24b to contact the switch mechanism 28.

In another embodiment shown in Fig. 3, the first plate 22 defines a third integrated fastener 52 configured to attach the switch mechanism 28 to the first plate 22. In a non-limiting example, the third integrated fastener 52 may be formed by a plastic snap feature 53 molded into the first plate 22. Alternately, the second plate 24 may define the third integrated fastener 52 to attach the switch mechanism 28 to the second plate 24.

The third integrated fastener 52 is configured to provide reliable alignment of the switch mechanism 28 in the sensor assembly 12. As a non-limiting example shown in Fig. 3, the third integrated fastener 52 may include a ridge 54 configured to precisely locate and align the switch mechanism 28 on the first plate 22. As a non-limiting example shown in Fig. 3, the third integrated fastener 52 may include a plurality of snap features 53 defining ramp features 53a that engage the switch mechanism 28 as it is inserted into the third integrated fastener 52 and push the snap feature 53 back. Once the switch mechanism 28 is inserted far enough to clear the ramp features 53a, the snap features 53 will snap back to their original position. The plurality of snap features 53 may also define ledge features 53b on the trailing edge of the ramp features 53a configured to lock the switch mechanism 28 in place once the snap features 53 snap back to their original position.

The third integrated fastener 52 eliminates separate fastening devices, such as adhesives or threaded fasteners, used with prior art sensor assemblies to attach the switch mechanism 28 to the first plate 22. The third integrated fastener 52 reduces the number of parts needed to assemble the sensor assembly 12, thereby beneficially reducing the part count and likely advantageously reducing the part cost of the sensor assembly 12. The third integrated fastener 52 allows the switch mechanism 28 to be assembled to the first plate 22 without the need to place, align, and assemble separate fastening devices, thus simplifying the assembly process for the sensor assembly 12. The third integrated fastener 52 may allow assembly of the switch mechanism 28 to the first plate 22 without the need for additional tools, potentially providing additional reduction of manufacturing costs of the sensor assembly 12.

In another embodiment shown in Fig. 3, the first plate 22 defines a fourth integrated fastener 55 configured to secure the wiring harness 20 to the first plate 22 in order to provide a strain relief function for the wiring harness 20. In a non-limiting example, the fourth integrated fastener 55 may be formed by a plastic snap feature molded into the first plate 22. Alternately, the second plate 24 may define the fourth integrated fastener 55 to secure the wiring harness 20 to the second plate 24.

The fourth integrated fastener 55 eliminates separate fastening devices, such as adhesives or brackets with threaded fasteners, used with prior art sensor assemblies to secure the wiring harness 20 to the first plate 22 in order to provide a strain relief function for the wiring harness 20. The fourth integrated fastener 55 reduces the number of parts needed to assemble the sensor assembly 12, thereby favorably reducing the part count and likely beneficially reducing the part cost of the sensor assembly 12. The fourth integrated fastener 55 allows the wiring harness 20 to be attached to the first plate 22 without the need to place, align, and assemble separate fastening devices or without the need to dispense adhesives, thus simplifying the assembly process for the sensor assembly 12. The fourth integrated fastener 55 may allow assembly of the wiring harness 20 to the first plate 22 without the need for additional tools, potentially providing additional reduction of manufacturing costs of the sensor assembly 12.

The switch mechanism 28 may define a vent hole. In another embodiment shown in Fig. 3, the first plate 22 defines a fluid management feature 56 configured to direct water or other fluids entering the sensor assembly 12 away from the vent hole in the switch mechanism 28 to prevent invasive fluids from damaging the switch mechanism 28. In a non-limiting example, the fluid management feature 56 may include a raised ridge 54 defined by the first plate 22 configured to block the invasive fluids from entering the switch mechanism 28. Alternately or in addition, the fluid management feature 56 may include a channel defined by the first plate 22 configured to carry fluids entering the sensor assembly 12 away from the switch mechanism 28. Alternately or in addition, the fluid management feature 56 management feature may include a drain hole defined by the first plate 22. Alternately or in addition, the second plate 24 may define the fluid management feature 56.

In another embodiment, as shown in Fig. 3 the elastomeric mat 26 defines a fifth integrated fastener 58 and the second plate 24 defines an attachment feature 60. The fifth integrated fastener 58 is configured to engage the attachment feature 60, thereby mechanically attaching the elastomeric mat 26 to the second plate 24. Alternately, the elastomeric mat 26 may be attached to the first plate 22 in a similar manner. In a non-limiting example, the fifth integrated fastener 58 may comprise a protuberance defining a nipple that is configured to engage the attachment feature 60. The attachment feature 60 may comprise a hole defined by the second plate 24. The nipple will compress as it is pushed through the attachment feature 60 and a lip on the trailing edge of the nipple will engage the outboard face 24a of the second plate 24 when the nipple is fully inserted.

The fifth integrated fastener 58 and the attachment feature 60 eliminate the need for separate fastening devices, such as push pins, used with prior art sensor assemblies to attach the elastomeric mat 26 to the second plate 24. The fifth integrated fastener 58 and the attachment feature 60 reduces the number of parts required to assemble the sensor assembly 12, thereby reducing the assembly part count and likely reducing the total part cost of the sensor assembly 12. The fifth integrated fastener 58 and the attachment feature 60 allows the elastomeric mat 26 to be assembled to the second plate 24 without the need to place, align, and assemble separate fastening devices, thus simplifying the assembly process for the sensor assembly 12. The fifth integrated fastener 58 and the attachment feature 60 may allow assembly of the elastomeric mat 26 to the second plate 24 without the need for additional tools, potentially providing additional reduction of manufacturing costs of the sensor assembly 12.

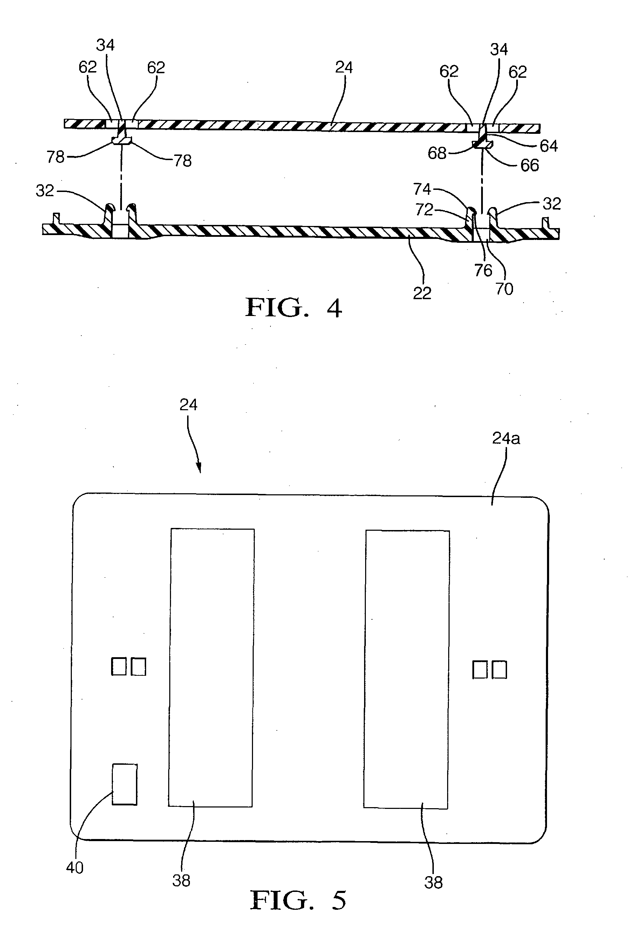

In another embodiment, as shown in Fig. 4, the first integrated fastener 32 and the second integrated fastener 34 are configured to limit lateral movement of the first plate 22 relative to the second plate 24. Limiting lateral movement may help to ensure proper alignment of the first and second plates 22, 24 thereby providing more consistent activation of the switch mechanism 28. In a non-limiting example, the second plate 24 defines a pair of rectangular openings 62 configured to accommodate the first integrated fastener 32. The second integrated fastener 34 is disposed between the pair of rectangular openings 62. The second integrated fastener 34 comprises a first protrusion having a cross section generally characterized as having a beveled T or arrow shape defining a vertical portion 64 and a horizontal portion 66. The horizontal portion 66 of the second integrated fastener 34 is configured to slidably engage the first integrated fastener 32. A leading edge of the horizontal portion 66 defines a beveled edge 68 configured to facilitate assembly with the first integrated fastener 32.

The first plate 22 defines a rectangular opening 70. The first integrated fastener 32 is disposed on opposite sides of the rectangular opening 70. The first integrated fastener 32 comprises a second protrusion characterized as having a rhomboid prism portion 72 and a ramp portion 74 configured to facilitate assembly with the second integrated fastener 34. Without subscribing to any particular theory of operation, as the first integrated fastener 32 engages the second integrated fastener 34, the horizontal portion 66 of the second integrated fastener 34 contacts the ramp portion 74 of the first integrated fastener 32 and spreads the ramp portions of the first integrated fastener 32 apart. The ramp portion 74 defines a ledge 76 configured to engage the horizontal portion 66 of the second integrated fastener 34. After the horizontal portion 66 of the second integrated connector is pushed past the ledge 76, the ramp portions will return to their original position, thereby slidably coupling the first plate 22 to the second plate 24.

In another embodiment shown in Fig. 4, a plurality of surfaces 78 defined by the horizontal portion 66 of the second integrated fastener 34 are in substantially intimate contact with the rhomboid prism portion 72 of the first integrated fastener 32, effective to limit the lateral movement of the first plate 22 relative to the second plate 24 along a first lateral axis 84. In a non-limiting example, once the first integrated fastener 32 is slidably coupled to the second integrated fastener 34, the ramp portion 74 of the first integrated fastener 32 may be in substantially intimate contact with the vertical portion 64 of the second integrated fastener 34 and the horizontal portion 66 of the second integrated fastener 34 may be in substantially intimate contact with the rhomboid prism portion 72 of the first integrated fastener 32. As user herein, substantially intimate contact means the two components are touching but still allow free movement between the components in response to forces applied to the first and second plates 22, 24 by the elastomeric mat 26 and forces applied to the first and second plates 22, 24 due to seat occupant weight.

In another embodiment shown in Fig. 3, a plurality of prism surfaces 80 defined by the rhomboid prism portion 72 are in substantially intimate contact with a plurality of opening surfaces 82 defined by a side of the pair of rectangular openings 62, effective to limit the lateral movement of the first plate 22 relative to the second plate 24. Because these surfaces may be perpendicular to the ramp portion 74 of the first integrated fastener 32 and the horizontal portion 66 of the second integrated fastener 34, the contact of the prism surfaces 80 with the opening surfaces 82 may be effective to further limit lateral motion along a second lateral axis 86 perpendicular to the first lateral axis 84.

In another embodiment shown in Fig. 1, the switch mechanism 28 is provided with a depressible element 28a that extends upward toward the second plate 24. As a non-limiting example, the depressible element 28a may be the plunger (armature) of a sealed switch element; in this case, the second plate 24 contacts and linearly displaces the plunger as the protuberances 50 of elastomeric mat 26 collapse when an occupant sits on the seat cushion 18. Alternately, the switch mechanism 28 may be configured as a metal dome switch such as those produced by Snaptron, Inc. of Windsor CO, where the depressible element 28a is the dome; in this case, the dome switch may be mounted on a small circuit board that is affixed to the inboard face 22b of the first plate 22, and optionally, the inboard face 24b of the second plate 24 may be provided with a downwardly extending dimple that contacts and deflects the dome to actuate the switch mechanism 28 when the protuberances 50 of elastomeric mat 26 collapse. As a further alternative, the switch mechanism 28 may be configured as a magnetic switch such as a sealed reed switch, a Hall Effect switch, a giant magnetoresistive (GMR) switch, or an anisotropic magnetoresistive (AMR) switch. In this case, a magnet is affixed to the second plate 24 so that the switch mechanism 28 is activated (indicating occupant presence) when the protuberances 50 of elastomeric mat 26 collapse to bring the magnet sufficiently close to the switch mechanism 28.

In another embodiment, the elastomeric mat 26 is formed of a resilient material, such as silicone rubber, that is manufactured to exhibit a desired stiffness so that for any given seat, the protuberances 50 of the elastomeric mat 26 produce the clearance between the second plate 24 and the depressible element 28a of the switch mechanism 28 when the protuberances 50 are not collapsed, and occupant weight of a specified or higher amount on a seating area causes the protuberances 50 to collapse so that the second plate 24 displaces the depressible element 28a to activate the second state of the switch mechanism 28.

It will be appreciated that the sensor assembly 12 can be manufactured at a relatively low cost because the components themselves are simple and inexpensive. And this cost effectiveness is enhanced due to the fact that the sensor assembly 12 can be configured to provide a reliable occupant presence indication for seats having different constructions and/or materials, and seats having different firmness due to differences in the stiffness of seat cushion 18 or the springiness of seat suspension 16, simply through proper selection of the elastomeric mat 26. For example, a seat that is very firm will generally require a sensor having an elastomeric mat 26 exhibiting a high degree of stiffness, and a seat that is less firm will require a sensor having an elastomeric mat 26 exhibiting a lower degree of stiffness. But in any event, the other components of the sensor assembly 12 remain the same.

As illustrated in Fig. 5, the outboard face 24a of second plate 24 may be provided with strips of double-sided tape 38 to secure the sensor assembly 12 to the lower surface of the seat cushion 18. As also illustrated in Fig. 5, the second plate 24 may be provided with an opening 40 to permit visual inspection of the underlying elastomeric mat 26. Visual inspection of the elastomeric mat 26 is important when elastomeric mats of diverse stiffness for different seat applications are color-coded by stiffness.

In summary, the integrated fasteners 32, 34, 52, 55, 58 allow the sensor assembly 12 to be assembled without any separate fastening devices, such as adhesives, push pins, or threaded fasteners. The integrated fasteners 32, 34, 52, 55, 58 reduce the number of parts needed to assemble the sensor assembly 12, thereby beneficially reducing the part count and likely favorably reducing the total part cost of the sensor assembly 12. The integrated fasteners 32, 34, 52, 55, 58 allow the sensor assembly 12 to be assembled without the need to place, align, and assemble separate fastening devices, thus simplifying the assembly process for the sensor assembly 12, potentially providing additional reduction of manufacturing costs of the sensor assembly 12.

The integrated fasteners 32, 34, 52, 55, 58 may allow assembly of the sensor assembly 12 without the need for any additional tools. Additionally, the first and second integrated fasteners 32, 34 may be configured to limit lateral motion in two different lateral axes. Limiting lateral movement between the first and second plate 22, 24 may help to ensure proper alignment of the first and second plates 22, 24 thereby providing more consistent activation of the switch mechanism 28.

While this invention has been described in terms of the preferred embodiments thereof, it is not intended to be so limited, but rather only to the extent set forth in the claims that follow. Moreover, the use of the terms first, second, etc. does not denote any order of importance, but rather the terms first, second, etc. are used to distinguish one element from another. Furthermore, the use of the terms a, an, etc. do not denote a limitation of quantity, but rather denote the presence of at least one of the referenced items.

## Claims

1. A sensor assembly (12) for detecting an occupant on a seating surface of a seat (10), comprising:
a first plate (22) and a second plate (24) disposed in the seat (10) in an orientation that is substantially parallel to the seating surface, wherein the first plate (22) and the second plate (24) are substantially non-compliant;
an elastomeric mat (26) disposed between the first plate (22) and the second plate (24), the elastomeric mat (26) including an array of protuberances (50) that extend toward and contact at least one of the first plate (22) and the second plate (24), where the protuberances (50) collapse by an amount indicative of an occupant weight when the occupant sits on the seating surface; and
a switch mechanism (28) affixed to at least one of the first plate (22) and the second plate (24), the switch mechanism (28) having a first state corresponding to an absence of the occupant whereby the protuberances (50) of the elastomeric mat (26) are not collapsed and indicating an occupant weight less than a threshold, and a second state corresponding the presence of the occupant whereby the protuberances (50) of the elastomeric mat (26) are collapsed and indicating an occupant weight greater than the threshold,
**characterized in that** the first plate (22) defines a first integrated fastener (32) and said second plate (24) defines a second integrated fastener (34) configured to engage with the first integrated fastener (32) effective to slidably couple the first plate (22) to the second plate (24), limit motion such that the first plate (22) and the second plate (24) are separated by less than a maximum distance when the protuberances (50) of the elastomeric mat (26) are not collapsed, and allow translational movement of the first plate (22) relative to the second plate (24) effective to collapse the protuberances (50) when the occupant weight is greater than the threshold and thereby cause the switch mechanism (28) to indicate the second state.

2. The assembly of claim 1, wherein the first plate (22) defines a third integrated fastener (52) configured to attach the switch mechanism (28) to the first plate (22).

3. The assembly of claim 1, wherein said switch mechanism (28) further comprises a wiring harness (20), wherein the first plate (22) defines a fourth integrated fastener (55) configured to secure the wiring harness (20) to the first plate (22) in order to provide a strain relief function for the wiring harness (20).

4. The assembly of claim 1, wherein said elastomeric mat (26) comprises a first elastomeric mat (26a) and a second elastomeric mat (26b).

5. The assembly of claim 1, wherein the elastomeric mat (26) defines a fifth integrated fastener (58) and the Second plate (24) defines an attachment feature (60), wherein the fifth integrated fastener (58) is configured to engage the attachment feature (60), thereby attaching the elastomeric mat (26) to the second plate (24).

6. The assembly of claim 1, wherein said first integrated fastener (32) and said second integrated fastener (34) are configured to limit lateral movement of the first plate (22) relative to the second plate (24).

7. The assembly of claim 6, wherein the second plate (24) defines a pair of rectangular openings (62) configured to accommodate the first integrated fastener (32), wherein the second integrated fastener (34) is disposed between the pair of rectangular openings (62), wherein the second integrated fastener (34) comprises a first protrusion having a cross section characterized as having a beveled T shape defining a vertical portion (64) and a horizontal portion (66), wherein the horizontal portion (66) is configured to slidably engage said first integrated fastener (32), wherein a leading edge of the horizontal portion (66) defines a beveled edge (68) configured to facilitate assembly with the first integrated fastener (32).

8. The assembly of claim 7, wherein the first plate (22) defines a rectangular opening (70), wherein the first integrated fastener (32) is disposed on opposite sides of the rectangular opening (70), wherein the first integrated fastener (32) comprises a second protrusion characterized as having a rhomboid prism portion (72) and a ramp portion (74) configured to facilitate assembly with said second integrated fastener (34), wherein the ramp portion (74) defines a ledge (76) configured to engage the horizontal portion (66) of the second integrated fastener (34), thereby slidably coupling the first plate (22) to the second plate (24).

9. The assembly of claim 8, wherein a plurality of surfaces (78) defined by said horizontal portion (66) of the second integrated fastener (34) are in substantially intimate contact with the rhomboid prism portion (72) of the first integrated fastener (32), effective to limit the lateral movement of the first plate (22) relative to the second plate (24).

10. The assembly of claim 8, wherein a plurality of prism surfaces (80) defined by said rhomboid prism portion (72) are in substantially intimate contact with a plurality of opening surfaces (82) defined by a side of the pair of rectangular openings (62), effective to limit the lateral movement of the first plate (22) relative to the second plate (24).

11. The assembly of claim 1, wherein said elastomeric mat (26) includes a first array of protuberances (50) that extend toward and contact the first plate (22) and a second array of protuberances (50) that extend toward and contact the second plate (24).

12. The assembly of claim 11, wherein the protuberances (50) of the first array of protuberances (50) and the second array of protuberances (50) are hollow.

13. The assembly of claim 1, wherein the switch mechanism (28) is affixed to the first plate (22), and includes a depressible element (28a) extending toward the second plate (24), wherein the protuberances (50) of the elastomeric mat (26) produce a clearance between the depressible element (28a) and the second plate (24) when the protuberances (50) are not collapsed.

14. The assembly of claim 13, wherein the elastomeric mat (26) is formed of a material that is manufactured to exhibit a desired stiffness so that for any given seat, the protuberances (50) of the elastomeric mat (26) produce the clearance between the second plate (24) and the depressible element (28a) of the switch mechanism (28) when the protuberances (50) are not collapsed, and occupant weight of a specified or higher amount on a seating area causes the protuberances (50) to collapse so that the second plate (24) displaces the depressible element (28a) to activate the second state of the switch mechanism (28).

15. The assembly of claim 14, wherein elastomeric mats (26a) of exhibiting different stiffness are color-coded based on stiffness to allow visual confirmation that a mat of a correct stiffness is installed in a given sensor.

## Patentansprüche

1. Eine Sensoranordnung (12) zum Erfassen eines Insassen auf einer Sitzfläche eines Sitzes (10), die aufweist:
eine erste Platte (22) und eine zweite Platte (24), die in dem Sitz (10) in einer Ausrichtung angeordnet sind, die im Wesentlichen parallel zu der Sitzfläche ist, wobei die erste Platte (22) und die zweite Platte (24) im Wesentlichen nicht nachgiebig sind;
eine elastomere Matte (26), die zwischen der ersten Platte (22) und der zweiten Platte (24) angeordnet ist, wobei die elastomere Matte (26) eine Anordnung von Vorsprüngen (50) umfasst, die sich in Richtung zumindest einer der ersten Platte (22) und der zweiten Platte (24) erstrecken und diese kontaktieren, wobei die Vorsprünge (50) bei einem Betrag kollabieren, der ein Insassengewicht angibt, wenn der Insasse auf der Sitzfläche sitzt; und
einen Schaltmechanismus (28), der an zumindest einer der ersten Platte (22) und der zweiten Platte (24) befestigt ist, wobei der Schaltmechanismus (28) einen ersten Zustand hat entsprechend einer Abwesenheit des Insassen, wodurch die Vorsprünge (50) der elastomeren Matte (26) nicht kollabiert sind und ein Insassengewicht geringer als eine Schwelle angegeben wird, und einen zweiten Zustand entsprechend der Anwesenheit des Insassen, wodurch die Vorsprünge (50) der elastomeren Matte (26) kollabiert sind und ein Insassengewicht größer als die Schwelle angegeben wird,
**dadurch gekennzeichnet, dass** die erste Platte (22) eine erste integrierte Befestigungseinrichtung (32) definiert und die zweite Platte (24) eine zweite integrierte Befestigungseinrichtung (34) definiert, die konfiguriert ist, mit der ersten integrierten Befestigungseinrichtung (32) in Eingriff zu sein, wirksam zum verschiebbaren Koppeln der ersten Platte (22) mit der zweiten Platte (24), zum Begrenzen einer Bewegung derart, dass die erste Platte (22) und die zweite Platte (24) um weniger als einen maximalen Abstand getrennt sind, wenn die Vorsprünge (50) der elastomeren Matte (26) nicht kollabiert sind, und zum Ermöglichen einer translatorischen Bewegung der ersten Platte (22) relativ zu der zweiten Platte (24), wirksam zum Kollabieren der Vorsprünge (50), wenn das Insassengewicht größer ist als die Schwelle, und dadurch Veranlassen des Schaltmechanismus (28), den zweiten Zustand anzuzeigen.

2. Die Anordnung gemäß Anspruch 1, wobei die erste Platte (22) eine dritte integrierte Befestigungseinrichtung (52) definiert, die konfiguriert ist zum Befestigen des Schaltmechanismus (28) an der ersten Platte (22).

3. Die Anordnung gemäß Anspruch 1, wobei der Schaltmechanismus (28) weiter einen Kabelbaum (20) aufweist, wobei die erste Platte (22) eine vierte integrierte Befestigungseinrichtung (55) definiert, die konfiguriert ist zum Sichern des Kabelbaums (20) an der ersten Platte (22), um eine Zugentlastungsfunktion für den Kabelbaum (20) vorzusehen.

4. Die Anordnung gemäß Anspruch 1, wobei die elastomere Matte (26) eine erste elastomere Matte (26a) und eine zweite elastomere Matte (26b) aufweist.

5. Die Anordnung gemäß Anspruch 1, wobei die elastomere Matte (26) eine fünfte integrierte Befestigungseinrichtung (58) definiert und die zweite Platte (24) ein Befestigungsmerkmal (60) definiert, wobei die fünfte integrierte Befestigungseinrichtung (58) konfiguriert ist zum Eingreifen in das Befestigungsmerkmal (60), wodurch die elastomere Matte (26) an der zweiten Platte (24) befestigt wird.

6. Die Anordnung gemäß Anspruch 1, wobei die erste integrierte Befestigungseinrichtung (32) und die zweite integrierte Befestigungseinrichtung (34) konfiguriert sind zum Begrenzen einer seitlichen Bewegung der ersten Platte (22) relativ zu der zweiten Platte (24).

7. Die Anordnung gemäß Anspruch 6, wobei die zweite Platte (24) ein Paar von rechteckigen Öffnungen (62) definiert, die konfiguriert sind zum Aufnehmen der ersten integrierten Befestigungseinrichtung (32), wobei die zweite integrierte Befestigungseinrichtung (34) zwischen dem Paar von rechteckigen Öffnungen (62) angeordnet ist, wobei die zweite integrierte Befestigungseinrichtung (34) einen ersten Vorsprung mit einem Querschnitt aufweist, der gekennzeichnet ist als mit einer abgeschrägten T-Form, die einen vertikalen Teil (64) und einen horizontalen Teil (66) definiert, wobei der horizontale Teil (66) konfiguriert ist für einen verschiebbaren Eingriff mit der ersten integrierten Befestigungseinrichtung (32), wobei eine Vorderkante des horizontalen Teils (66) eine abgeschrägte Kante (68) definiert, die konfiguriert zum Erleichtern eines Zusammenbaus mit der ersten integrierten Befestigungseinrichtung (32).

8. Die Anordnung gemäß Anspruch 7, wobei die erste Platte (22) eine rechteckige Öffnung (70) definiert, wobei die erste integrierte Befestigungseinrichtung (32) auf entgegengesetzten Seiten der rechteckigen Öffnung (70) angeordnet ist, wobei die erste integrierte Befestigungseinrichtung (32) einen zweiten Vorsprung aufweist, der gekennzeichnet als mit einem rhombenförmigen Prismenteil (72) und einem Rampenteil (74), konfiguriert zum Erleichtern eines Zusammenbaus mit der zweiten integrierten Befestigungseinrichtung (34), wobei der Rampenteil (74) einen Absatz (76) definiert, der konfiguriert ist für einen Eingriff mit dem horizontalen Teil (66) der zweiten integrierten Befestigungseinrichtung (34), wodurch die erste Platte (22) mit der zweiten Platte (24) verschiebbar gekoppelt wird.

9. Die Anordnung gemäß Anspruch 8, wobei eine Vielzahl von Oberflächen (78), die durch den horizontalen Teil (66) der zweiten integrierten Befestigungseinrichtung (34) definiert sind, im Wesentlichen in engem Kontakt mit dem rhombenförmigen Prismenteil (72) der ersten integrierten Befestigungseinrichtung (32) sind, wirksam zum Begrenzen der seitlichen Bewegung der ersten Platte (22) relativ zu der zweiten Platte (24).

10. Die Anordnung gemäß Anspruch 8, wobei eine Vielzahl von Prismenoberflächen (80), die durch den rhombenförmigen Prismenteil (72) definiert sind, im Wesentlichen in engem Kontakt mit einer Vielzahl von Öffnungsflächen (82) sind, die durch eine Seite des Paares von rechteckigen Öffnungen (62) definiert sind, wirksam zum Begrenzen der seitlichen Bewegung der ersten Platte (22) relativ zu der zweiten Platte (24).

11. Die Anordnung gemäß Anspruch 1, wobei die elastomere Matte (26) eine erste Anordnung von Vorsprüngen (50) umfasst, die sich in Richtung der ersten Platte (22) erstrecken und diese kontaktieren, und eine zweite Anordnung von Vorsprüngen (50), die sich in Richtung der zweiten Platte (24) erstrecken und diese kontaktieren.

12. Die Anordnung gemäß Anspruch 11, wobei die Vorsprünge (50) der ersten Anordnung von Vorsprüngen (50) und der zweiten Anordnung von Vorsprüngen (50) hohl sind.

13. Die Anordnung gemäß Anspruch 1, wobei der Schaltmechanismus (28) an der ersten Platte (22) befestigt ist und ein drückbares Element (28a) umfasst, das sich in Richtung der zweiten Platte (24) erstreckt, wobei die Vorsprünge (50) der elastomeren Matte (26) einen Zwischenraum zwischen dem drückbaren Element (28a) und der zweiten Platte (24) erzeugen, wenn die Vorsprünge (50) nicht kollabiert sind.

14. Die Anordnung gemäß Anspruch 13, wobei die elastomere Matte (26) aus einem Material gebildet ist, das hergestellt ist, um eine gewünschte Steifigkeit zu zeigen, so dass für einen gegebenen Sitz die Vorsprünge (50) der elastomeren Matte (26) den Zwischenraum zwischen der zweiten Platte (24) und dem drückbaren Element (28a) des Schaltmechanismus (28) erzeugen, wenn die Vorsprünge (50) nicht kollabiert sind, und das Insassengewicht eines spezifizierten oder höheren Betrags auf einem Sitzbereich verursacht, dass die Vorsprünge (50) kollabieren, so dass die zweite Platte (24) das drückbare Element (28a) versetzt, um den zweiten Zustand des Schaltmechanismus (28) zu aktivieren.

15. Die Anordnung gemäß Anspruch 14, wobei elastomere Matten (26a) unterschiedlicher Steifigkeit basierend auf der Steifigkeit farblich codiert sind, um eine visuelle Bestätigung zu ermöglichen, dass eine Matte mit einer korrekten Steifigkeit in einem gegebenen Sensor installiert ist.

## Revendications

1. Ensemble détecteur (12) pour détecter un occupant sur une surface d'assise d'un siège (10), comprenant :
une première plaque (22) et une seconde plaque (24) disposées dans le siège (10) dans une orientation qui est sensiblement parallèle à la surface d'assise, dans lequel la première plaque (22) et la seconde plaque (24) sont sensiblement non flexibles ;
un mat en élastomère (26) disposé entre la première plaque (22) et la seconde plaque (24), le mat en élastomère (26) incluant un réseau de protubérances (50) qui s'étendent vers et qui viennent en contact avec au moins une plaque parmi la première plaque (22) et la seconde plaque (24), de sorte que les protubérances (50) s'écrasent d'une quantité indicative du poids d'un occupant lorsque l'occupant est assis sur la surface d'assise ; et
un mécanisme commutateur (28) fixé sur l'une au moins parmi la première plaque (22) et la seconde plaque (24), le mécanisme commutateur (28) ayant un premier état correspondant à une absence de l'occupant, de sorte que les protubérances (50) du mat élastomère (26) ne sont pas écrasées et indiquant un poids d'occupant inférieur à un seuil, et un second état correspondant la présence de l'occupant, de sorte que les protubérances (50) du mat élastomère (26) sont écrasées et indiquant un poids d'occupant supérieur au seuil,
**caractérisé en ce que** la première plaque (22) définit un premier élément de fixation intégré (32) et ladite seconde plaque (24) définit un second élément de fixation intégré (34) configuré pour s'engager avec le premier élément de fixation intégré (32) de manière effective pour coupler la première plaque (22) à la seconde plaque (24) en coulissement, pour limiter le mouvement de telle façon que la première plaque (22) et la seconde plaque (24) soient séparées de moins d'une distance maximum quand les protubérances (50) du mat élastomère (26) ne sont pas écrasées, et permettre un mouvement de translation de la première plaque (22) par rapport à la seconde plaque (24) de manière effective pour écraser les protubérances (50) quand le poids de l'occupant est supérieur au seuil, et amener ainsi le mécanisme commutateur (28) à indiquer le second état.

2. Ensemble selon la revendication, dans lequel la première plaque (22) définit un troisième élément de fixation intégré (52) pour attacher le mécanisme commutateur (28) à la première plaque (22).

3. Ensemble selon la revendication 1, dans lequel ledit mécanisme commutateur (28) inclut en outre un faisceau de câblage (20), dans lequel la première plaque (22) définit un quatrième élément de fixation intégré (55) configuré pour fixer le faisceau de câblage (20) sur la première plaque (22) afin d'assurer une fonction de relâchement de contraintes pour le faisceau de câblage (20).

4. Ensemble selon la revendication 1, dans lequel ledit mat élastomère (26) comprend un premier mat élastomère (26a) et un second mat élastomère (26b).

5. Ensemble selon la revendication 1, dans lequel le mat élastomère (26) définit un cinquième élément de fixation intégré (58) et la seconde plaque (24) définit une caractéristique d'attache (60), dans lequel le cinquième élément de fixation intégré (58) est configuré pour engager la caractéristique de fixation (60), en attachant ainsi le mat élastomère (26) sur la seconde plaque (24).

6. Ensemble selon la revendication 1, dans lequel ledit premier élément de fixation intégré (32) et ledit second élément de fixation intégré (34) sont configurés pour limiter un mouvement latéral de la première plaque (22) par rapport à la seconde plaque (24).

7. Ensemble selon la revendication 6, dans lequel la seconde plaque (24) définit une paire d'ouvertures rectangulaires (62) configurées pour loger le premier élément de fixation intégré (32), dans lequel le second élément de fixation intégré (34) est disposé entre la paire d'ouvertures rectangulaires (62), dans lequel le second élément de fixation intégré (34) comprend une première projection ayant une section transversale caractérisée comme ayant une forme en T biseautée définissant une portion verticale (64) et une portion horizontale (66), dans lequel la portion horizontale (66) est configurée pour engager en coulissement ledit premier élément de fixation intégré (32), et dans lequel un bord d'attaque de la portion horizontale (66) définit un bord biseauté (68) configuré pour faciliter l'assemblage avec le premier élément de fixation intégré (32).

8. Ensemble selon la revendication 7, dans lequel la première plaque (22) définit une ouverture rectangulaire (70), dans lequel le premier élément de fixation intégré (32) est disposé sur des côtés opposés de l'ouverture rectangulaire (70), dans lequel le premier élément de fixation intégré (32) comprend une seconde projection caractérisée comme présentant une portion en prisme rhomboédrique (72) et une portion en rampe (74) configurée pour faciliter l'assemblage avec ledit second élément de fixation intégré (34), dans lequel la portion en rampe (74) définit un rebord (76) configuré pour engager la portion horizontale (66) du second élément de fixation intégré (34), en couplant ainsi la première plaque (22) sur la seconde plaque (24) en coulissement.

9. Ensemble selon la revendication 8, dans lequel une pluralité de surfaces (78) définies par ladite portion horizontale (66) du second élément de fixation intégré (34) en contact sensiblement intime avec la portion en prisme rhomboédrique (72) du premier élément de fixation intégré (32), de manière effective pour limiter le mouvement latéral de la première plaque (22) par rapport à la seconde plaque (24).

10. Ensemble selon la revendication 8, dans lequel une pluralité de surfaces en prisme (80) définies par ladite portion en prisme rhomboédrique (72) sont en contact sensiblement intime avec une pluralité de surfaces ouvertes (82) définies par un côté de la paire d'ouvertures rectangulaires (62), de manière effective pour limiter le mouvement latéral de la première plaque (22) par rapport à la seconde plaque (24).

11. Ensemble selon la revendication 1, dans lequel ledit mat élastomère (26) inclut un premier réseau de protubérances (50) qui s'étendent vers et jusqu'en contact avec la première plaque (22), et un second réseau de protubérances (50) qui s'étendent vers et jusqu'en contact avec la seconde plaque (24).

12. Ensemble selon la revendication 11, dans lequel les protubérances (50) du premier réseau de protubérances (50) et du second réseau de protubérances (50) sont creuses.

13. Ensemble selon la revendication 1, dans lequel le mécanisme commutateur (28) est fixé sur la première plaque (22) et inclut un élément à enfoncer (28a) s'étendant vers la seconde plaque (24), dans lequel les protubérances (50) du mat élastomère (26) produisent un jeu entre l'élément à enfoncer (28a) et la seconde plaque (24) quand les protubérances (50) ne sont pas écrasées.

14. Ensemble selon la revendication 13, dans lequel le mat élastomère (26) est formé d'un matériau qui peut être fabriqué pour présenter une rigidité désirée, de sorte pour qu'un siège donné quelconque les protubérances (50) du mat élastomère (26) produisent le jeu entre la seconde plaque (24) et l'élément à enfoncer (28a) du mécanisme commutateur (28) quand les protubérances (50) ne sont pas écrasées, et un occupant d'un poids spécifique ou plus élevé sur une zone d'assise amène les protubérances (50) à s'écraser de sorte que la seconde plaque (24) déplace l'élément à enfoncer (28a) pour activer le second état du mécanisme commutateur (28).

15. Ensemble selon la revendication 14, dans lequel des mats élastomères (26a) présentant différentes rigidités sont codés avec des couleurs en se basant sur la rigidité pour permettre une confirmation visuelle qu'un mat de rigidité correcte est installé dans un capteur donné.
